# EUROPEAN PATENT APPLICATION

(11) **EP 4 660 725 A1**
(43) Date of publication of application: **10.12.2025**
(21) Application number: 25163039.8
(22) Date of filing: 11.03.2025
(51) Int. Cl.: G05B 19/401

(54) **A SYSTEM AND METHOD FOR AUTOMATED CUTTING**

(30) Priority: 05.06.2024 US 202418734202
(71) Applicant: Lockheed Martin Corporation, Bethesda, MD 20817 (US)
(72) Inventor: McCRORY, Christopher Sean, Fort Worth, TX 76107 (US); TORRES, Ethan Louis, Fort Worth, TX 76244 (US); LANGEVIN, Jeffrey Paul, Fort Worth, TX 76104 (US); DREWETT, Jeffrey Thomas, Kennedale, TX 76060 (US)
(74) Representative: Barker Brettell LLP

(57) **Abstract**

A cutting system (100) is provided. The cutting system (100) comprises a scanning device (104) configured to scan a first object (102), compare the first object (102) with a tolerance range, and calculate a first set of offset values. The cutting system (100) further comprises a cutting device (106) configured to receive the first set of offset values and cut the first object (102) based on the first set of offset values. The scanning device (104) also rescans the first object (102) after the cutting device (106) cuts the first object (102), determines whether the cut first object (102) is within a tolerance range, and calculates a second set of offset values if the cut first object (102) is not within the tolerance range. The cutting device (106) also receives the second set of offset values and cuts the cut first object (102) based on the second set of offset values. A method (200) and a non-transitory computer-readable medium also disclosed.

## Description

### TECHNICAL FIELD

This disclosure relates in general to a cutting system, and more particularly to a system and method for automated cutting.

### BACKGROUND

Different parts, such as tubes, may be used in a variety of vehicles and applications. As one example, tubes may be used in aircrafts to carry fuel, hydraulic fluid, and electrical cables. These parts may be trimmed and fit prior to welding. In order to ensure accurate cuts, the parts must be measured to adjust for batch-to-batch variation. Typically, the parts are cut and scanned using separate systems that require the manual transportation of the parts between the systems and require manual measurement adjustments.

### SUMMARY

According to one embodiment, a cutting system includes a scanning device, a cutting device, and a holder. The scanning device is configured to scan the surface of an object to collect data points to capture the geometry of the object. The cutting device is configured to cut the object. The holder is configured to fix the object in place while the scanning device scans the object, and the cutting device cuts the object.

According to another embodiment, a method of automated cutting executed by a cutting system includes scanning an object using a scanning device. The method also includes comparing a scan of the object with a tolerance range using a computer system. The tolerance range comprises the maximum and minimum measurement values for the object. The method further includes calculating a first offset value if the object is not within the tolerance range using the computer system. The offset value comprises the difference between a predetermined base measurement and the object. The method further includes cutting the object based on the first offset value using a cutting device. The method further includes rescanning the object after the cutting device cuts the object using the scanning device. The method further includes comparing the scan of the cut object with the tolerance range using the computer system. The method further includes calculating a second offset value if the cut object is not within the tolerance range, cutting the object based on the second offset value using the cutting device, scanning the cut object using the scanning device, and comparing the object with the tolerance range using the computer system. The method further includes calculating a final offset value using the computer system if the object is within the tolerance range. The final offset value may be based on the totality of the offset values calculated to cut the object within tolerance. The method further includes receiving a plurality of objects and cutting the plurality of objects based on the final offset value.

Technical advantages of certain embodiments may include providing systems and methods of automatically scanning and cutting an object within a single system. Instead of the typical manual process currently used to cut an object within tolerance, the disclosed embodiments quickly and automatically cut the object, scan the object, and implement the necessary measurement adjustments. The disclosed embodiments save considerable time and expense and improve performance. Other technical advantages will be readily apparent to one skilled in the art from the following figures, descriptions, and claims. Moreover, while specific advantages have been enumerated above, various embodiments may include all, some, or none of the enumerated advantages.

### BRIEF DESCRPTION OF THE DRAWINGS

For a more complete understanding of the present disclosure and its advantages, reference is now made to the following description, taken in conjunction with the accompanying drawings, in which:
FIGURE 1 illustrates a cutting system, according to certain embodiments;
FIGURE 2 illustrates a method of automated cutting, according to certain embodiments; and
FIGURE 3 is an example computer system that can be utilized to implement aspects of the various technologies presented herein, according to particular embodiments.

### DETAILED DESCRIPTION

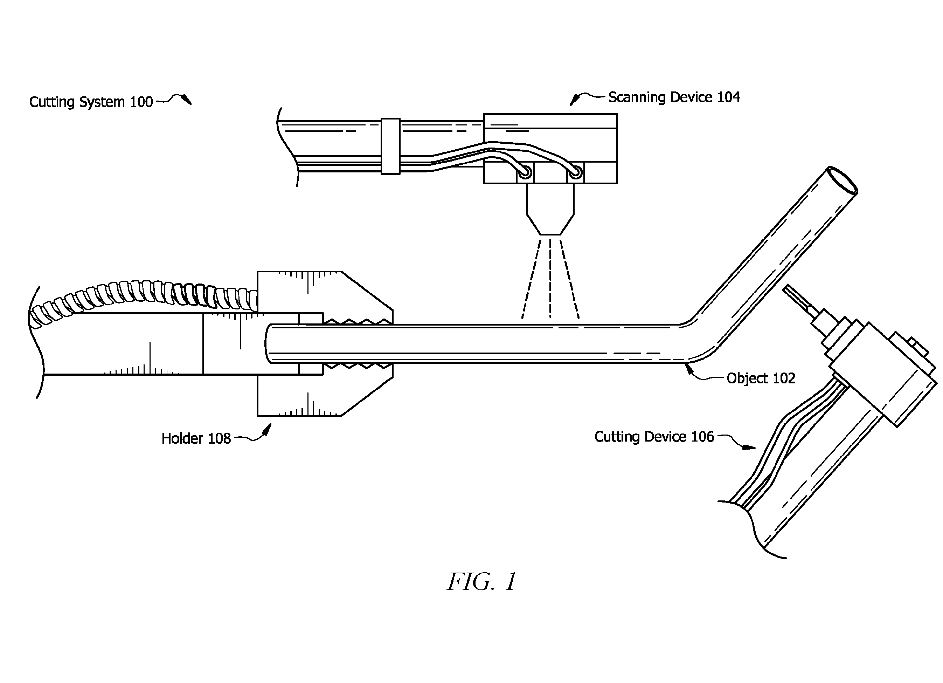

To facilitate a better understanding of the present disclosure, the following examples of certain embodiments are given. The following examples are not to be read to limit or define the scope of the disclosure. Embodiments of the present disclosure and its advantages are best understood by referring to FIGURES 1 through 3, where like numbers are used to indicate like and corresponding parts.

As described, automated cutting systems may require a secondary scanning system. A secondary scanning system requires an operator to transport the object (uncut or cut) from the cutting system to the secondary scanning system, operate the scanning system, transport the object to be cut back to the cutting system, and input the results from the scanning system into the cutting system. The current cutting systems are labor intensive, susceptible to operator error, and costly. Described herein are various systems and methods that provide for autonomous scanning and cutting procedures within one system.

FIGURE 1 illustrates an example cutting system 100 that cuts an object 102. Any suitable cutting system may be used as the cutting system 100. The object 102 may be a tube, conduit, pipe, sheet, and the like. The object 102 may be comprised of any suitable material. Without limitation, object 102 may be comprised of metal, plastic, ceramics, wood, and the like. In one or more embodiments, the object 102 may be disposed within the cutting system 100.

In one or more embodiments, the cutting system 100 may comprise a scanning device 104. As illustrated, the scanning device 104 may be integrated into the cutting system 100. The scanning device 104 scans the surface of the object 102 to collect data points to capture the geometry of the object 102. Any suitable type of scanning device may be used as the scanning device 104. Without limitations, scanning device 104 may be a metrology scanner, 3D scanner, laser scanner, and the like.

In one or more embodiments, the cutting system 100 may comprise a cutting device 106. As illustrated, the cutting device 106 may be integrated into the cutting system 100. The cutting device 106 cuts the object 102. The cutting device 106 may cut the object 102 in any suitable manner. Without limitations, cutting device 106 may cut object 102 laterally, orthogonally, around an axis, by etching a shape onto the surface of the object 102, and the like. Any suitable type of cutting device may be used as the cutting device 106. Without limitations, cutting device 106 may be a laser cutter, hydraulic cutter, and the like.

In one or more embodiments, the cutting system 100 may comprise a holder 108. As illustrated, the holder 108 may be integrated into the cutting system 100. The holder 108 fixes the object 102 in place while the scanning device 104 scans the object 102 and while the cutting device 106 cuts the object 102. Any suitable type of mechanism to hold the object 102 in place may be used as the holder 108. Without limitations, holder 108 may be a fastener, clasp, clamp, adhesive, and any combination thereof. The scanning device 104, the cutting device 106, and the holder 108 may be disposed at any suitable location to form cutting system 100. In embodiments, each of the scanning device 104, cutting device 106, and holder 108 may be coupled together through any suitable means, including, but not limited to, fasteners, threading, welding, brazing, adhesives, and any combination thereof.

Cutting system 100 may operate in any suitable manner. In an exemplary embodiment of operation, cutting system 100 may scan an uncut object 102 using the scanning device 104. Cutting system 100 may compare the uncut object 102 to a particular range in which uncut object 102 should be. This range represents the tolerance range. If the uncut object 102 is within the tolerance range, the cutting system 100 may proceed to cut the plurality of objects 102. If the uncut object 102 is not within the tolerance range, the cutting system 100 may calculate an amount to cut object 102 for object 102 to be within the tolerance range. This calculated amount represents an offset value. Once the offset value is calculated, cutting system 100 uses that to cut object 102 to be within the tolerance range. Once object 102 is within the tolerance range, cutting system 100 proceeds to cut a plurality of objects 102.

Modifications, additions, or omissions may be made to cutting system 100 as shown in FIGURE 1. For example, scanning device 104 may be separate from the cutting system 100. As another example, the cutting system 100 may be configured to scan more than one object 102 at any given time. As another example, the cutting system 100 may be configured to cut more than one object at any given time.

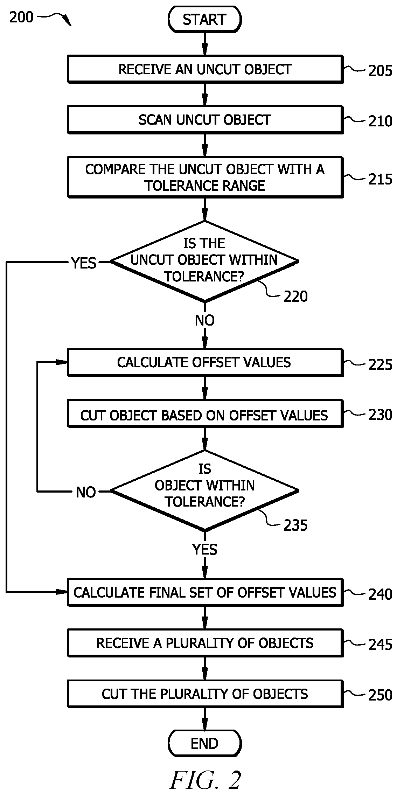

FIGURE 2 illustrates a method of automated cutting, according to certain embodiments. Method 200 may be performed by cutting system 100. Method 200 begins at step 205 where the cutting system 100 receives an uncut object, such as object 102. The cutting system 100 may receive the object 102 by any suitable method. For example and not by way of limitation, the cutting system 100 may receive the object 102 through a conveyor system, an operator manually placing the object 102 in the cutting system 100, and the like. At step 210, the object 102 is scanned using a scanning device, such as scanning device 104.

At step 215, the scan of the object 102 is compared with a tolerance range using a computer system, such as computer system 300. The tolerance range may be any permissible variation in measurements deriving from a base measurement. The tolerance range may include any suitable unit of measurement, such as linear, angular, and other physical dimensions. The tolerance range may be input into the computer system 300 by any suitable means. For example, and without limitations, the method 200 may indicate a base length measurement of five meters. The method 200 may allow a tolerance of plus or minus 0.1 meters. In this instance, the tolerance range may be between 4.9 and 5.1 meters. In this instance, the object 102 may be within tolerance if its length is between 4.9 and 5.1 meters.

At step 220, if the object 102 is within tolerance, the cutting system 100 will move to step 240, where the cutting system 100 will receive a plurality of objects. If the object 102 is not within the tolerance range, the cutting system 100 may proceed to step 225. At step 225, the cutting system 100 calculates one or more offset values based on the difference between the object 102 and the base measurement. In certain embodiments, the cutting system 100 may calculate the offset value using a computer system, such as computer system 300. For example, and without limitations, an uncut object 102 may have a length of six meters. As discussed above, for example, the base length measurement may be five meters. In this instance, the offset value may be one meter. At step 230, the cutting system 100 cuts the object 102 using a cutting device, such as cutting device 106. The cutting system 100 may adjust the cutting device 106 to an appropriate position on the surface of the object 102 based on the offset value using a computer system, such as computer system 300.

At step 235, the cutting system 100 determines if the cut object is within tolerance. The cutting system 100 may use a scanning device, such as scanning device 104, to rescan the cut object. The cut object may then be compared with the tolerance range using a computer system, such as computer system 300. If the cut object is within tolerance, the cutting system 100 may proceed to step 240, where the cutting system 100 calculates the final offset value. If the cut object is not within tolerance, the cutting system 100 will move back to step 225 where a new offset value will be calculated by comparing the cut object with the tolerance range using a computer system, such as computer system 300. When the cut object is within tolerance, the cutting system 100 may proceed to step 240.

At step 240, the cutting system 100 calculates the final offset value using a computer system, such as computer system 300. The final offset value may be based on the totality of the offset values cutting system 100 calculated to cut object 102 within tolerance. The offset value may be null and/or zero if the cutting system 100 determined that the uncut object was within tolerance at step 220.

At step 245, the cutting system 100 receives a plurality of objects. At step 250, the cutting system 100 cuts the plurality of objects using a cutting device, such as cutting device 106. The cutting system 100 may adjust the cutting device 106 to an appropriate position on the surface of the plurality of objects based on the final offset value using a computer system, such as computer system 300.

Modifications, additions, or omissions may be made to the method as described in FIGURE 2. For example, the scanning of the uncut object at step 210 may be done in parallel with comparing the uncut object with a tolerance range at step 215. As another example, at step 215, the uncut object may be compared to any predetermined metric, not just a tolerance range. As another example, the uncut object may be marked based on the offset value rather than cut, as described in step 230. Step 235 may then determine whether the marked object would be within tolerance if the object was cut where the system marked the object. Additionally, this disclosure contemplates any suitable method 200 for automated cutting, including any suitable steps, which may include all, some, or none of the steps of the flowchart of FIGURE 2, where appropriate. Although this disclosure describes and illustrates particular steps of method 200 of FIGURE 2 as occurring in a particular order, this disclosure contemplates any suitable steps of method 200 of FIGURE 2 occurring in any suitable order. Although this disclosure describes and illustrates particular components, devices, or systems carrying out particular steps of method 200 of FIGURE 2, this disclosure contemplates any suitable combination of any suitable components, devices, or systems carrying out any suitable steps of method 200 of FIGURE 2.

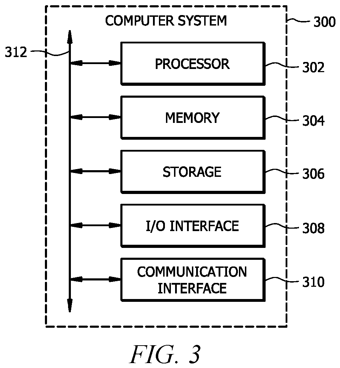

FIGURE 3 illustrates an example computer system 300 that may be used by the system of FIGURE 1, according to certain embodiments. In one or more embodiments, the computer system 300 may be communicatively coupled to the scanning device 104 and the cutting device 106. Computer system 300 may be any processing device that controls the operations of one or more components of the cutting system 100 and/or produces data. During operations, the computer system 300 may be operable to receive data from the scanning device 104 for processing, process the data to produce offset value by comparing the object 102 to a tolerance range, transmit the offset value to the cutting device 106, and any combinations thereof. Computer system 300 may determine whether a component of the cutting system 100 requires power and/or may initiate the distribution of power to the one or more components. Computer system 300 may be hard-wired and/or wirelessly connected to scanning device 104 and cutting device 106. For example, computer system 300 may include one or more interface(s), processing circuitry, memor(ies), and / or other suitable element(s). Interface receives input, sends output, processes the input and/or output, and/or performs other suitable operation. Interface may comprise hardware and/or software.

Processing circuitry performs or manages the operations of the component. Processing circuitry may include hardware and/or software. Examples of a processing circuitry include one or more computers, one or more microprocessors, one or more applications, etc. In certain embodiments, processing circuitry executes logic (e.g., instructions) to perform actions (e.g., operations), such as generating output from input. The logic executed by processing circuitry may be encoded in one or more tangible, non-transitory computer readable media (such as memory). For example, the logic may comprise a computer program, software, computer executable instructions, and/or instructions capable of being executed by a computer. In particular embodiments, the operations of the embodiments may be performed by one or more computer readable media storing, embodied with, and/or encoded with a computer program and/or having a stored and/or an encoded computer program.

Memory (or memory unit) stores information. Memory may comprise one or more non-transitory, tangible, computer-readable, and/or computer-executable storage media. Examples of memory include computer memory (for example, RAM or ROM), mass storage media (for example, a hard disk), removable storage media (for example, a Compact Disk (CD) or a Digital Video Disk (DVD)), database and/or network storage (for example, a server), and/or other computer-readable medium.

Herein, a computer-readable non-transitory storage medium or media may include one or more semiconductor-based or other integrated circuits (ICs) (such field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Technical advantages of this disclosure may include one or more of the following. Previous methods provided determining is an object 102 is within tolerance and calculating offset value in a secondary scanning system. The cutting system 100 described herein may decrease the amount of time required to cut the object 102 within tolerance and may increase the accuracy for the measurements.

The present disclosure may provide numerous advantages, such as the various technical advantages that have been described with respective to various embodiments and examples disclosed herein. Other technical advantages will be readily apparent to one skilled in the art from the following figures, descriptions, and claims. Moreover, while specific advantages have been enumerated in this disclosure, various embodiments may include all, some, or none of the enumerated advantages.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A system, comprising:
a scanning device configured to:
scan a first object;
compare the first object with a tolerance range; and
calculate a first set of offset values;
a cutting device configured to:
receive the first set of offset values; and
cut the first object based on the first set of offset values.

2. The system of claim 1, wherein the scanning device is further configured to:
rescan the first object after the cutting device cuts the first object;
determine whether the cut first object is within a tolerance range; and
calculate a second set of offset values if the cut first object is not within the tolerance range.

3. The system of claim 2, wherein the cutting device is further configured to:
receive the second set of offset values; and
adjust the cutting device based on the second set of offset values.

4. The system of claim 3, where the cutting device cuts the first object after adjusting based on the second set of offset values.

5. The system of claim 4, wherein the cutting device receives a second object and cuts the second object based on the second set of offset values.

6. The system of claim 2, wherein the cutting device receives a second object and cuts the second object based on the first set of offset values if the cut first object is within the tolerance range.

7. The system of claim 1, or any other preceding claim, wherein the first object is a tube.

8. The system of claim 1, or any other preceding claim, wherein the cutting device:
(a) is configured to rotate around an axis to adjust an angle of a cut; and/or
(b) etches a shape onto a surface of the first object.

9. A method, comprising:
receiving a first object;
scanning the first object using a scanning device;
comparing the first object with a tolerance range;
calculating a first set of offset values; and
cutting the first object using a cutting device based on the first set of offset values.

10. The method of claim 9, further comprising:
rescanning the first object after the cutting device cuts the first object;
determining whether the cut first object is within a tolerance range; and
calculating a second set of offset values if the cut first object is not within the tolerance range,
and optionally or preferably the method further comprises:
adjusting the cutting device based on the second set of offset values, and yet further optionally or preferably the method further comprises:
receiving a second object; and
cutting the second object using the cutting device based on the second set of offset values.

11. The method of claim 9 or claim 10, further comprising cutting a second object based on the first set of offset values if the cut first object is within the tolerance range.

12. The method of claim 9 or claim 10 or claim 11, wherein the cutting the first object further comprises:
(a) rotating the cutting device around an axis to adjust an angle of the cut; and/or
(b) the cutting device etching a shape onto a surface of the first object.

13. A non-transitory computer-readable medium comprising instructions that are configured, when executed by a processor, to perform operations comprising:
receiving a tolerance range;
receiving a scan of a first object;
comparing the scan of the first object with the tolerance range; and
determining if the first object is within tolerance.

14. The non-transitory computer-readable medium of claim 13, further comprising:
in response to determining the first object is within tolerance, calculating a final set of offset values; and
sending instructions to a cutting system to cut a plurality of objects based on the final set of offset values.

15. The non-transitory computer-readable medium of claim 14, further comprising:
in response to determining the first object is not within tolerance, calculating a set of offset values;
sending instructions to a cutting system to cut the first object based on the first set of offset values;
receiving a scan of the cut first object;
comparing the scan of the cut first object with the tolerance range; and
determining if the cut first object is within tolerance range,
and optionally or preferably the non-transitory computer readable medium further comprising:
in response to determining the cut first object is within tolerance, calculating a final set of offset values; and
sending instructions to the cutting system to cut a plurality of objects based on the final set of offset values.
